Europäisches Patentamt

European Patent Office

Office européen des brevets

(19)

(11) Veröffentlichungsnummer: **0 240 795 B1**

(12)                    **EUROPÄISCHE PATENTSCHRIFT**

(45) Veröffentlichungstag der Patentschrift: 06.03.91          (51) Int. Cl.⁵: **B60K 17/348**, B60K 23/08

(21) Anmeldenummer: 87103982.2

(22) Anmeldetag: 18.03.87

(54) **Kraftfahrzeug mit Allradantrieb.**

(30) Priorität: 03.04.86 DE 3611093

(43) Veröffentlichungstag der Anmeldung:
14.10.87 Patentblatt 87/42

(45) Bekanntmachung des Hinweises auf die
Patenterteilung:
06.03.91 Patentblatt 91/10

(84) Benannte Vertragsstaaten:
DE ES FR GB IT

(56) Entgegenhaltungen:
EP-A- 0 149 302
DE-A- 3 015 379
DE-A- 3 317 247

(73) Patentinhaber: **Adam Opel Aktiengesellschaft**
**Bahnhofsplatz 1 Postfach 17 10**
**W-6090 Rüsselsheim(DE)DE**

Patentinhaber: **General Motors Espana, S.A.**
**Poligono Entrerrios**
**Figueruelas (Zaragoza)(ES)ES**

(72) Erfinder: **Bausch, Paul**
**Auf der Irrlitz 30**
**W-6229 Hattenheim(DE)**
Erfinder: **Hemmer, Hans-Peter, Dipl.-Ing.**
**Van-Dyck-Strasse 5**
**W-5205 St. Augustin(DE)**

(74) Vertreter: **Bergerin, Ralf, Dipl.-Ing. et al**
**Adam Opel Aktiengesellschaft Bahnhofplatz**
**1 Postfach 17 10**
**W-6090 Rüsselsheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Kraftfahrzeug mit Allradantrieb, bei dem die Räder nur einer Achse ständig angetrieben sind, während der Antrieb für die Räder der zweiten Achse mittels einer im Antriebsstrang zwischen den Achsen liegenden, in Abhängigkeit von den Fahrbedingungen selbsttätig wirkenden Kupplung, insbesondere einer Viskose-Kupplung, herstellbar ist.

Eine Viskose-Kupplung überträgt bei geringen Drehzahldifferenzen der gekuppelten Wellen nur sehr kleine Drehmomente, und bei größeren Drehzahldifferenzen hohe Drehmomente. Je nach Einbauort im Antriebsstrang kann die Viskose-Kupplung daher als in Abhängigkeit von den Fahrbedingungen selbsttätig sperrendes Mittendifferential oder kombiniertes Mittendifferntial und Achsdifferential arbeiten. Im normalen Fahrbetrieb des Kraftfahrzeugs treten nur geringe Drehzahldifferenzen zwischen den Rädern der beiden Achsen auf. Die Viskose-Kupplung überträgt ein entsprechend geringes Antriebsdrehmoment, und man hat ein Fahrverhalten, das im wesentlichen dem eines Kraftfahrzeugs mit nur einer angetriebenen Achse entspricht. Ergeben sich aber beispielsweise bei geringen Reibwerten, wie sie auf nassen, eis- oder schneeglatten oder sandigen Straßen vorzufinden sind, größere Drehzahldifferenzen zwischen den Rädern, so "sperrt" die Viskose-Kupplung, und man hat je nach Einbauart der Viskose-Kupplung das Fahrverhalten eines allradgetriebenen Fahrzeugs mit gesperrtem Mittendifferential bzw. gesperrtem Mittendifferential und gesperrtem Achsdifferential. Mit der Viskose-Kupplung wird also ein permanent in Bereitschaftstellung befindlicher Allradantrieb realisiert.

Die mit der Viskose-Kupplung bewirkte drehzahldifferenzabhängige Kopplung zwischen den Achsen des Kraftfahrzeugs ist nun nicht immer erwünscht. Blockieren beispielsweise bei einer Betätigung der Betriebsbremse die Vorderräder, so werden über die Viskose-Kupplung zwangsweise auch die Hinterräder überbremst, was zu einem Verlust der Fahrstabilität führt. Ein etwa vorgesehenes Antiblockiersystem muß den Besonderheiten des Allradantriebs mit Viskose-Kupplung Rechnung tragen, was einen hohen konstruktiven Aufwand mit sich bringt. Im Schubbetrieb des Motors bei Geradeausfahrt treibt die Hinterachse über die Viskose-Kupplung den Motor an. Dabei verlieren die Hinterräder auf glattem Untergrund an Seitenführungskraft, und das Fahrzeug kann ausbrechen. Im Schubbetrieb bei enger Kurvenfahrt treibt umgekehrt die Vorderachse über die Viskose-Kupplung die Hinterachse an. Daraus resultiert ein Verlust an Seitenführungskraft, aufgrund dessen das Fahrzeug nach außen schiebt. Ein allradgetriebenes Fahrzeug mit Viskose-Kupplung läßt sich nicht wie üblich mit angehobener Vorderachse auf einer Abschleppbrille abschleppen, da dies Drehzahldifferenzen in der Viskose-Kupplung zur Folge hat, die zum Hump und zur Zerstörung führen. Beim Rangieren des Fahrzeugs insbesondere zum Ausparken kann es bei winterlichen Temperaturen zu einem Haftschluß in der Viskose-Kupplung kommen. Daraus resultiert ein erheblich vergrößerter Lenkkraftaufwand, der die Bedienung des Fahrzeugs höchst unbequem macht. Bei Rollenprüfstandsmessungen beispielsweise für Leistungs- und Emisionstests braucht man für allradgetriebene Fahrzeuge mit Viskose-Kupplung einen Zweiachs-Rollenprüfstand, der viel aufwendiger ist als ein Einachs-Rollenprüfstand und in den Werkstätten vielfach noch nicht zur Verfügung steht. Ebenso muß bei einem dynamischen Auswuchten der Räder das ganze Fahrzeug vom Boden abgehoben werden, und nicht nur die Räder an jeweils einer auszuwuchtenden Achse, was einen erheblichen Mehraufwand bedingt. Nach alledem gibt es sowohl im Fahrbetrieb, als auch bei der Wartung eines allradgetriebenen Fahrzeugs mit Viskose-Kupplung genug Situationen, in denen man auf die drehmomentenmäßige Kopplung der Achsen über die Viskose-Kupplung lieber verzichten würde.

In der DE-A- 33 17 247 wurde bereits vorgeschlagen, zusammen mit der Viskose-Kupplung eine steuerbare Zusatzkupplung in den Antriebsstrang eines Kraftfahrzeugs zu legen, um eine drehmomentmäßige Kopplung und Entkopplung des Antriebs zu ermöglichen. Die bekannte Zusatzkupplung ist als drehmomentenmäßig selbsttätig koppel- und entkoppelbarer Klemmrollenfreilauf oder als hydraulisch oder elektromagnetisch betätigte schaltbare Trennkupplung ausgebildet. Sie sorgt dafür, daß bei Betätigung der Betriebsbremse kein Drehmoment über den Antriebsstrang zwischen den Achsen des Fahrzeugs übertragen wird, so daß bei einem Überbremsen der Vorderräder die Hinterräder nicht mit blockieren.

Die aus der DE-A- 33 17 247 bekannten Bauformen einer Zusatzkupplung sind konstruktiv aufwendig, sperrig und nicht leicht in den Antriebsstrang eines Kraftfahrzeugs zu integrieren, und ihre Ansteuerung gewährleistet nicht, daß die drehmomentenmäßige Kopplung der Fahrzeugachsen in allen Situationen unterbrochen ist, in denen dies wünschenswert erscheint.

Aufgabe der Erfindung ist es, eine Zusatzkupplung für ein Kraftfahrzeug nach dem Oberbegriff des Patentanspruchs 1 anzugeben, die sich bei unaufwendigem, kompaktem Aufbau einfach in den Antriebsstrang integrieren läßt und eine allen Fahr-, Wartungs- und Testsituationen optimal Rechnung tragende Ansteuerung erfährt.

Zur Lösung dieser Aufgabe wird erfindungsgemäß vorgeschlagen, daß als Zusatzkupplung ein zwischen den Achsen vorgesehenes Planetengetriebe dient, auf das steuerbare Mittel zum Sperren eines Getriebeelements arbeiten.

Die Erfindung gibt nun dem Planetengetriebe zugleich die Funktion einer Zusatzkupplung in dem Antriebsstrang, in dem die Viskose-Kupplung liegt, was zu einem konstruktiv unaufwendigen, kompakten, verschleißfesten und verlustarmen Getriebeaufbau führt.

In einer bevorzugten Ausführungsform ist das Hohlrad des Planetengetriebes drehbar gelagert und mittels einer Bremse festbremsbar. Diese Anordnung kommt in ihrem Platzbedarf der eines Planetengetriebes mit karosseriefestem Hohlrad nahe, d.h. sie baut höchst kompakt. Auch ist das Hohlrad als radial außenliegendes Teil des Planetengetriebes für den Angriff einer Bremse hervorragend geeignet. Der Antrieb des Planetengetriebes kann über den Planetenträger, und der Abtrieb über das Sonnenrad erfolgen.

Das Hohlrad kann im normalen Fahrbetrieb des Kraftfahrzeugs festgebremst sein. Die drehmomentmäßige Kopplung der Achsen über die Viskose-Kupplung ist dann wirksam, und der Allradantrieb in ständiger Bereitschaftsstellung. Mittels einer geeigneten Steuereinheit sollte hingegen das Hohlrad durch Lösen der Bremse freigegeben, und die drehmomentmäßige Kopplung der Achsen aufgehoben werden, wenn bestimmte Fahr-oder Testbedingungen vorliegen. Dazu gehört jede Betätigung der Betriebsbremse, damit nicht bei einem Überbremsen der Räder an der Vorderachse, die üblicherweise stärker zur Haftwertausnutzung beim Bremsen herangezogen werden, zwangsweise auch die Räder der Hinterachse blockieren. Die Entkopplung der Achsen beim Bremsen hat außerdem den Vorteil, daß das Fahrzeug mit einem Antiblockiersystem ausgerüstet werden kann, wie es für einachsig angetriebene Fahrzeuge üblich ist. Es entfällt also der Bauaufwand für ein besonderes, mit einem Vierradantrieb kompatibles Antiblockiersystem. Die Steuereinheit sollte auch im Schubbetrieb des Motor ansprechen und das Hohlrad freigeben, um so die Fahrstabilität zu verbessern. Beim Abschleppen des Fahrzeugs ist ebenfalls ein möglichst automatisches Freigeben des Hohlrads erwünscht, damit schädliche Drehzahldifferenzen in der Viskosekupplung vermieden werden. Genauso sollte die Steuereinheit im Fall niedriger Umgebungstemperaturen beim Rangieren ansprechen um im Fall eines möglicherweise vorliegenden Haftschlusses in der Viskose-Kupplung den Lenkkraftaufwand gering zu halten. Und schließlich sollte für Wartungsarbeiten zumindest eine Werkstatt die Möglichkeit haben, die Steuereinheit zu aktivieren und das Hohlrad freizugeben, damit das Fahrzeug beispielsweise für Leistungs- und Emissionsmessungen auf einem Einachs-Rollenprüfstand getestet werden kann und beim dynamischen Auswuchten der Räder nur im Bereich einer Achse angehoben werden muß.

Die Steuereinheit kann als Eingangsgrößen insbesondere ein die Stellung von Bremspedal und Fahrpedal sowie ein den Einschaltzustand der Zündung charakterisierendes Signal erhalten. Weitere mögliche Eingangsgrößen für die Steuereinheit sind das Signal eines Lenkwinkelgebers und das Signal eines Temperaturfühlers an der Viskose-Kupplung sowie gegebenenfalls ein die Motordrehzahl charakterisierendes Signal und das Signal eines Zeitgebers. Die Steuereinheit ermittelt aus diesen Eingangsgrößen ein die Bremse für das Hohlrad aktivierendes Ausgangssignal.

In einer alternativen Betriebsform der Erfindung ist das Hohlrad des Planetengetriebes im normalen Fahrbetrieb freigegeben. Der Allradantrieb ist dann per se nicht in der sonst durch die Viskose-Kupplung gewährleisteten ständigen Bereitschaftsstellung, sondern er wird durch Abbremsen des Hohlrads zugeschaltet. Damit geht der Vorteil einer geringen Getriebeverlustleistung einher während im übrigen alle Nutzungsmöglichkeiten einer Viskose-Kupplung weiter bestehen; insbesondere bildet die Viskose-Kupplung ein konstruktiv vergleichsweise unaufwendiges Mittendifferential bzw. kombiniertes Mittendifferntial und Achsdifferential. Das Festbremsen des Hohlrads kann durch einen Bedienungseingriff oder automatisch erfolgen, wobei man in letzterer Variante vorzugsweise die Drehzahl von Vorderachse und Hinterachse erfaßt und bei Überschreiten einer bestimmten Drehzahldifferenz die auf das Hohlrad arbeitende Bremse wirksam werden läßt. Zur Drehzahlerfassung können beispielsweise die entsprechenden Sensoren eines Antiblockiersystems dienen. Im prompten Einsetzen des Vierradantriebs steht die beschriebene Getriebeanordnung der einer Viskose-Kupplung allein nicht merklich nach.

Um das Hohlrad des Planetengetriebes abzubremsen, kann ein Bremsband Verwendung finden, das das Hohlrad umschlingt. Vorzugsweise ist ein vom Motoröldruck betätigtes Stellglied zum Spannen des Bremsbands vorgesehen. Letzteres hat den Vorteil, daß das Bremsband bei stehendem Motor gelöst, das Hohlrad entsprechend freigegeben und die drehmomentenmäßige Kopplung der Achsen durch die Viskose-Kupplung aufgehoben ist, so daß es insbesondere bei einem Abschleppen des Fahrzeugs mit angehobener Achse nicht zu Beschädigungen der Viskose-Kupplung kommen kann.

Das erfindungsgemäße Kraftfahrzeug kann einen vorzugsweise quer eingebauten Frontmotor haben. Seine Hauptantriebsachse ist vorzugsweise die Vorderachse, während die Viskose-Kupplung und das die Funktion einer Zusatzkupplung erfüllende Planetengetriebe in einem Antriebsstrang zur Hinterache liegen. Das Planetengetriebe kann dabei hinter dem Vorderachsdifferential und vorzugsweise unmittelbar vor der Viskose-Kupplung angeordnet sein. Doch sind auch andere Einbaupositionen für das Planetengetriebe denkbar, beispielsweise am Ende einer Kardanwelle vor dem Hinterachsdifferential.

Schließlich kann das erfindungsgemäße Kraftfahrzeug aber auch einen Standardantrieb mit einem Frontmotor und einer die Hauptantriebsachse bildenden Hinterachse haben. Man zweigt dann von dem zur Hinterachse führenden Antriebsstrang über das zugleich die Funktion einer Zusatzkupplung erfüllende Planetengetriebe und die Viskose-Kupplung einen Antriebsstrang an die Vorderachse ab.

Die Erfindung wird im folgenden anhand von in den Zeichnungen dargestellten Ausführungsbeispielen näher erläutert. Teilweise schematisch zeigen:

Fig. 1
das im Bereich des Vorderachsdifferentials angeordnete Verteilergetriebe eines allradgetriebenen Kraftfahrzeugs mit Frontmotor, ausgelegt als Planetengetriebe mit einem durch ein Bremsband festbremsbaren Hohlrad;

Fig. 2
eine Steuereinheit, die einen Antrieb zum Spannen und Lösen des Bremsbands ansteuert;

Fig. 3 und Fig. 4
zwei Bauformen eines Bremsbandantriebs, bei denen ein hydraulischer Membranservomotor mit elektromagnetischer Ansteuerung als Stellglied dient;

Fig. 5
einen Bremsbandantrieb mit einem Stellglied in Form eines hydraulischen Arbeitszylinders, der mittels einer elektromagnetisch betätigten Überspringfeder geschaltet wird;

Fig. 6
einen Bremsbandantrieb mit einem mechanischen Federspeicher und einem dagegen arbeitenden elektromagnetisch betätigten Stellglied;

Fig. 7
einen Bremsbandantrieb mit einem gegen einen Bremsbandhalter wirkenden, mittels eines Stellmotors in Drehung versetzbaren Exzenternocken;

Fig. 8
einen Bremsbandantrieb mit einer in angetriebene Drehung versetzbaren Exzenterwelle, über die das Bremsband gespannt ist;

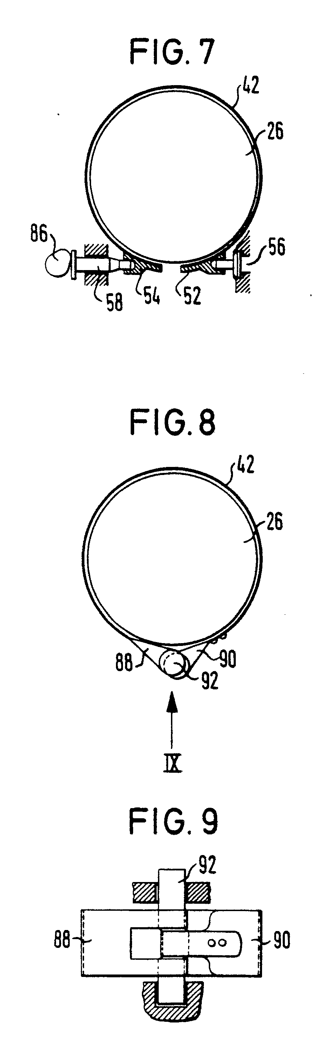

Fig. 9
eine Draufsicht auf den letztgenannten Bremsbandantrieb, teilweise im Schnitt, mit Blick in Richtung IX von Fig. 8;

Fig. 10
Fahrwerk und Antriebsstrang eines allradgetriebenen Kraftfahrzeugs mit Frontmotor und einem im Bereich des Vorderachsdifferentials angeordneten Verteilergetriebe, das als Planetengetriebe mit einem durch ein Bremsband festbremsbaren Hohlrad ausgelegt ist, wobei eine alternative Ansteuerung des Bremsbandantriebs erfolgt;

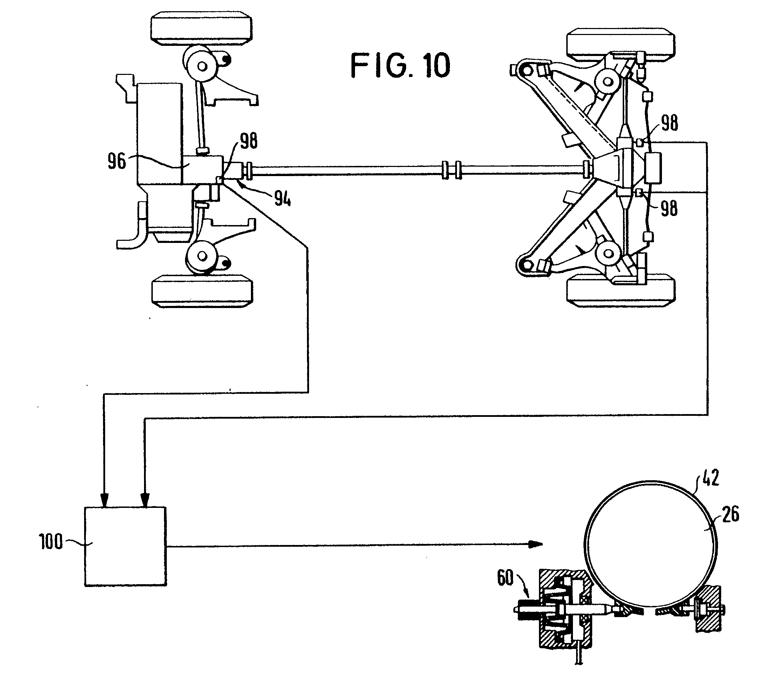

Fig. 11
das Blockschaltbild einer Steuereinheit für den Bremsbandantrieb gemäß Fig. 10.

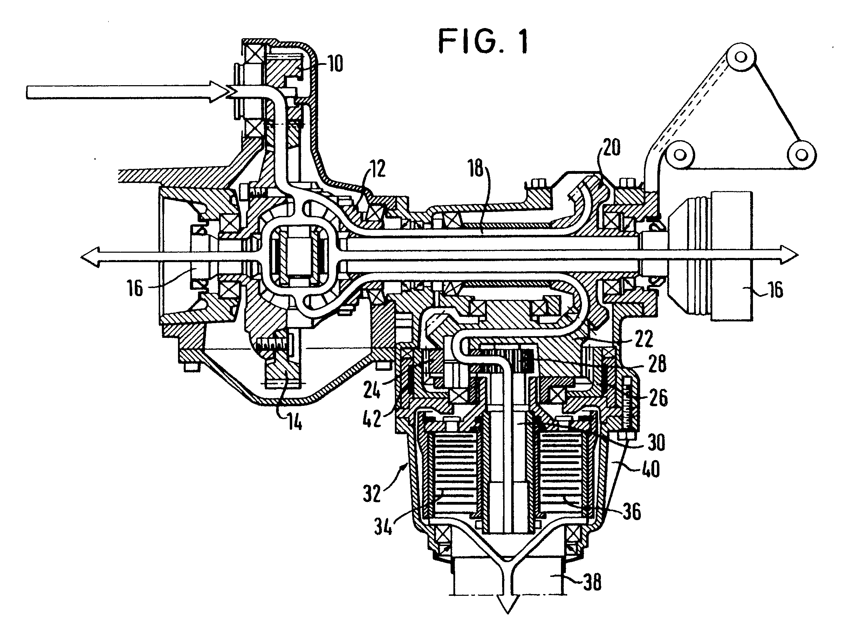

Fig. 1 zeigt die im Bereich des Vorderachsdifferentials liegende Getriebeanordnung eines Kraftfahrzeugs mit quer eingebautem Frontmotor. Das Antriebsdrehmoment des Motors wird über ein übliches Schaltgetriebe übertragen, dessen Ausgangsrad 10 eine Außenverzahnung aufweist und mit einem starr an dem Differentialgehäuse 12 des Vorderachsdifferentials angeordneten Zahnrad 14 kämmt. Ein Teil des Antriebsdrehmoments wird so über das Vorderachsdifferential auf die Vorderachswellen 16 und die daran sitzenden Vorderräder des Kraftfahrzeugs übertragen. Das Differentialgehäuse 12 ist drehfest mit einer Hohlwelle 18 verbunden, auf der in starrer Anordnung ein Tellerrad 20 sitzt. Letzteres steht mit einem Kegelrad 22 im Eingriff, das einen Planetenradträger bildet. Eines der Planetenräder ist bei 24 dargestellt. Die Planetenräder 24 stehen radial außen mit einem Hohlrad 26 und radial innen mit einem Sonnenrad 28 im Eingriff. Mit dem Sonnenrad 28 ist in starrer Anordnung ein Wellenstummel 30 verbunden, der in das Gehäuse einer Viskose-Kupplung 32 ragt und einen antriebsseitigen Lamellensatz 34 trägt. Dieser arbeitet mit einem abtriebsseitigen Lamellensatz 36 an einer zur Hinterachse führenden Gelenkwelle 38 zusammen. Das Hohlrad 26 des Planetengetriebes ist in einem fest mit der Fahrzeugkarosserie verbundenen Getriebegehäuse 40 gelagert. Es wird von einem Bremsband 42 umschlungen und kann durch Anziehen des Bremsbands 42 festgebremst werden.

Über den Antriebsstrang zur Hinterachse, in dem die Viskose-Kupplung liegt, wird bei festgebremsten Hohlrad 26 ein permanent in Bereitschaftsstellung befindlicher Allradantrieb geschaffen. Bei geringen Drehzahldifferenzen zwischen Vorderachse und Hinterachse, wie sie im normalen Fahrbetrieb vorliegen, überträgt die Viskose-Kupplung nur ein geringes Drehmoment, so daß man im wesentlichen das Fahrverhalten eines Kraftfahrzeugs mit Frontmotor und Vorderradantrieb erhält. Ergeben sich aber größere Drehzahldifferenzen zwischen den Rädern an Vorderachse und Hinterachse, wie dies beispielsweise bei Schlupf eines oder mehrerer der Räder auf glattem Untergrund der Fall ist, so "sperrt" die Viskose-Kupplung, und man hat das Fahrverhalten eines Kraftfahrzeugs mit Allradantrieb und gesperrtem Mittendifferential.

Bei gelöstem Bremsband 42 läuft das Hohlrad 26 frei. Drehzahldifferenzen zwischen den Rädern der Vorder- und Hinterachse können dann in dem Planetengetriebe mit sehr geringen Reibungsverlusten ausgeglichen werden, ohne daß sich etwas am Gleichlauf der antriebs- und abtriebsseitigen Lamellensätze 34, 36 der Viskosekupplung 32 ändert. Die Viskose-Kupplung überträgt also kein oder nur ein minimales Drehmoment, und Vorder- und Hinterachse bleiben drehmomentenmäßig auch unter Bedingungen entkoppelt, unter denen bei festem Hohlrad 26 die Viskose-Kupplung 32 sperren würde. Durch Lösen des Bremsbands 42 wird also der Allradantrieb praktisch außer Funktion gesetzt, und man erhält das Betriebsverhalten eines Fahrzeugs mit reinem Vorderradantrieb.

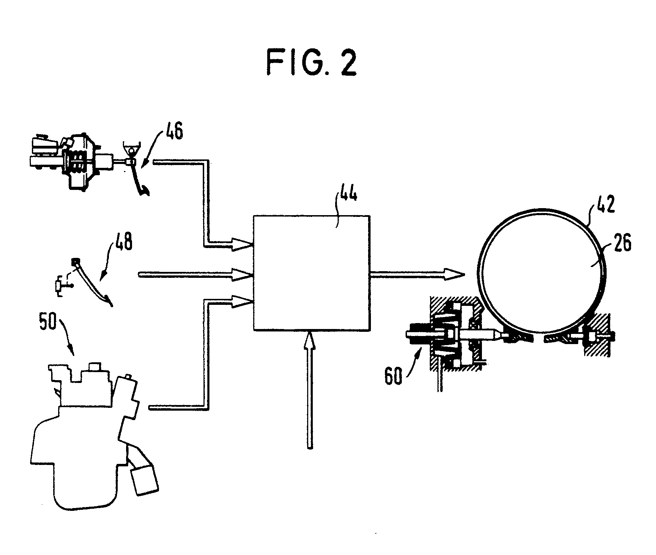

Ein Antrieb zum Spannen und Lösen des Bremsbands 42 kann mit einer Steuereinheit 44 angesteuert werden, wie sie schematisch in Fig. 2 dargestellt ist. Man geht hier von einem normalen Fahrbetrieb aus, bei dem das Bremsband 42 gespannt, das Hohlrad 26 entsprechend festgebremst und der über die Viskose-Kupplung 32 laufende Vierradantrieb in Bereitschaftsstellung ist. Der nachstehend noch näher erläuterte Bremsbandantrieb erhält von der Steuereinheit 44 ein Signal, aufgrund dessen das Bremsband 42 gelöst, und die drehmomentenmäßige Kopplung von Vorderachse und Hinterachse unterbrochen wird.

Die Steuereinheit 44 erhält Eingangsgrößen, die die Stellung eines Bremspedals 46, eines Fahrpedals 48 sowie den Einschaltzustand der Zündung 50 kennzeichnen. Weitere Eingangsgrößen können von einem Temperaturfühler an der Viskose-Kupplung 32 und von einem Lenkwinkelgeber kommen, wobei letztere dazu dient, einen Rangierbetrieb des Fahrzeugs zu identifizieren. Hierzu kann zusätzlich ein die Motordrehzahl charakterisierendes Signal und das Signal eines Zeitgebers herangezogen werden, der beispielsweise ein Zeitintervall nach dem Einschalten der Zündung 50 mißt. Aus diesen Eingangsgrößen wird in der Steuereinheit 44 das gewünschte Ausgangssignal für den Bremsbandantrieb ermittelt.

Das Bremsband 42 wird insbesondere dann gelöst, wenn die Betriebsbremse des Fahrzeugs betätigt wird. Dieser Betriebszustand wird anhand der Eingangsgrößen der Steuereinheit 44 dadurch identifiziert, daß das Bremspedal 46 getreten, das Fahrpedal 48 in seiner Null-Stellung und die Zündung 50 eingeschaltet ist.

Weiter wird das Bremsband 42 im Schubbetrieb des Fahrzeugs gelöst. Hierzu müssen Fahrpedal 48 und Bremspedal 46 in ihrer Null-Stellung und die Zündung 50 eingeschaltet sein.

Bei niedrigen Umgebungstemperaturen wird das Bremsband 42 beim Rangieren insbesondere zum Ausparken des Fahrzeugs gelöst. Hierzu muß die von dem Temperaturfühler an der Viskose-Kupplung 32 gemessene Temperatur unterhalb einer bestimmten Temperaturschwelle, beispielsweise - 5 C°, liegen, was durch ein entsprechendes Signal des Temperaturfühlers angezeigt wird. Weiter muß der Rangierbetrieb des Fahrzeugs anhand eines entsprechenden Signals des Lenkwinkelgebers und/oder eines die niedrige Motordrehzahl charakterisierenden Signals identifiziert sein. Der Lenkwinkelgeber kann beispielsweise bei mehr als einer Lenkradumdrehung ansprechen. Alternativ oder zusätzlich kann der regelmäßig erforderliche Rangierbetrieb kurz nach Einschalten der Zündung 50 des Kraftfahrzeugs durch ein entsprechendes Signal eines Zeitgebers identifiziert werden.

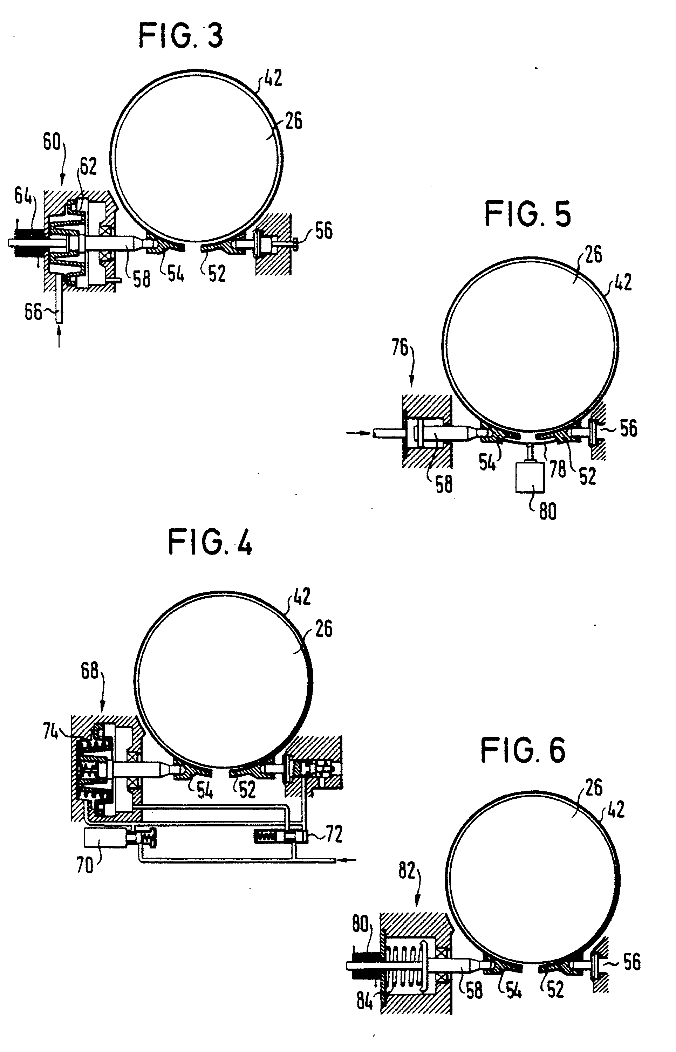

Schließlich sollte das Fachpersonal einer Werkstatt, eventuell aber auch der Fahrer des Kraftfahrzeugs durch einen geeigneten Schalteingriff in der Lage sein, die Steuereinheit 44 zu aktivieren, um das Bremsband 42 zu lösen. Damit können insbesondere bei Rollenprüfstandsmessungen und bei einem dynamischen Auswuchten der Räder die Achsen des Fahrzeugs drehmomentenmäßig entkoppelt werden. Dasselbe gilt, wenn das Fahrzeug auf einer Abschleppbrille abgeschleppt wird und dabei nur mit zwei Rädern auf dem Boden läuft. Das Abschleppen erfolgt stets mit stehendem Motor, aber mit möglicherweise eingeschalteter Zündung 50, so daß zur automatischen drehmomentenmäßigen Entkopplung der Achsen eine weitere Steuerungsvorgabe erforderlich ist. Man kann hier insbesondere ausnutzen, daß bei stehendem Motor der Motoröldruck abfällt, und einen von dem Motoröldruck betätigten Bremsbandantrieb vorsehen, wie er nachstehend in Fig. 3 bis 5 illustriert ist.

Die Bremsbandantriebe sind jeweils mit Blick auf die Stirnseite des Hohlrads 26 gezeigt, das wie auch die übrigen Teile des Planetengetriebes nur schematisch angedeutet ist. Das Bremsband 42 umschlingt das Hohlrad 26 über fast seinen vollen Umfang. An den beiden Enden des Bremsbands 42 ist je ein Halter 52, 54 befestigt. In den einen Halter 52 greift eine karosseriefest angebrachte Stellschraube 56 ein, die sich tangential zu dem Hohlrad 26 vorschraubt und dazu dient, die Spannung des Bremsbands 42 einzustellen.

In den anderen Halter 54 greift das Stellglied 58 eines hydraulisch betätigten Membran-Servomotors 60 ein. Das Stellglied 58 liegt dabei in fluchtender Anordnung der Stellschraube 56 gegenüber, und es wird in tangentialer Bewegung zum Hohlrad 26 angetrieben. Der Membran-Servomotor 60 hat ein Gehäuse, in dem von einer Membran 62 zwei Arbeitsräume abgeteilt werden. Das Stellglied 58 ist auf der Längsmittelachse des Gehäuses axial verschieblich angeordnet und mit dem Innenring der Membran 62 verbunden. Es ragt beidendig aus dem Gehäuse heraus, wobei das eine Ende in den Halter 54 eingreift, während das andere Ende mit einem Hubmagneten 64 zusammenwirkt. Derjenige Arbeitsraum, durch dessen Druckbeaufschlagung das Stellglied 58 zum Spannen des Bremsbands 42 ausgefahren wird, steht über einen Anschluß 66 ständig unter dem Druck des Motoröls. Der andere Arbeitsraum ist in der Bauform der Fig. 3 zur Atmosphäre hin druckentlastet und nicht beschaltet.

Im Betrieb spannt der Membran-Servomotor 60 bei laufendem Motor durch den an der Membran 62 anstehenden Motoröldruck das Bremsband 42, so daß das Hohlrad 26 festgebremst ist. Der über die Viskose-Kupplung 32 laufende Vierradantrieb ist also in ständiger Bereitschaftsstellung. Die hydraulische Stellkraft des Membran-Servomotors 60 kann aber durch Aktivieren des Hubmagnets 64 überwunden werden, wodurch das Stellglied 58 zurückgezogen und das Bremsband 42 gelöst wird. Dies geschieht anhand eines entsprechenden Ausgangssignals der Steuereinheit 44. Darüber hinaus wird das Bremsband 42 gelöst, wenn der Motor des Fahrzeugs steht, und der Motoröldruck entsprechend abfällt. Die drehmomentenmäßige Kopplung der Achsen über die Viskose-Kupplung 32 ist dann aufgehoben.

Fig. 4 zeigt eine alternative Bauform eines Bremsbandantriebs. Hier arbeiten vom Motoröldruck betätigte, hydraulische Hubaggregate auf die Halter 52, 54 an beiden Enden des Bremsbands 42. Man erreicht so eine gleichmäßige Einleitung der Bremskraft über dessen Umfang. Eines der Hubaggregate ist als doppeltwirkender Membran-Servomotor 68 ausgebildet, dessen Arbeitsräume über einen elektromagnetischen Schaltschieber 70 sowie einen Bremsband-Löseschieber 72 wechselweise mit dem Motoröldruck beaufschlagt werden können. Durch Federvorspannung 74 des Membran-Servomotor 68 ist dafur gesorgt, daß das Bremsband 42 bei abfallendem Motoröldruck gespannt ist.

Bei dem in Fig. 5 gezeigten Bremsbandantrieb ist wiederum am einen Ende des Bremsbands 42 ein Halter 52 mit einer darin eingreifenden Stellschraube 56 vorgesehen. Auf den Halter 54 am anderen Ende des Bremsbands 42 arbeitet das Stellglied 58 einer vom Motoröldruck betätigten Kolben-Zylinder-Einheit 76. Zwischen die Halter 52, 54 ist eine Überspringfeder 78 gespannt, die mittels eines Hubmagneten 80 betätigt wird. Statt eines solchen Hubmagneten 80 kann aber auch ein Nockenantrieb, ein Schrittmotor o.ä. auf die Überspringfeder 78 wirken. Diese hindert in ihrer Ruhestellung das Spannen des Bremsbands 42 nicht, so daß über die Kolben-Zylinder-Einheit 76 durch den Öldruck des laufenden Motors wiederum das Hohlrad 26 normalerweise festgebremst ist. Wird aber der Hubmagnet 80 o.ä. Antrieb betätigt, so werden die Halter 52, 54 auseinander gedrückt und das Hohlrad 26 freigegeben.

Die Abbildung Fig. 6 bis Fig. 9 zeigt alternative, nicht hydraulisch betätigte Bremsbandantriebe. So steht in Fig. 6 das auf den Halter 54 am einen Ende des Bremsbands 42 arbeitende Stellglied 58 unter der Kraft eines mechanischen Federspeichers 82 mit einer Druckfeder 84. Das Bremsband 42 ist so normalerweise gespannt. Das Stellglied 58 kann mittels eines Hubmagneten 64 gegen die Kraft der Druckfeder 84 zurückgezogen werden, wodurch das Hohlrad 26 freigegeben wird.

Fig. 7 illustriert einen Bremsbandantrieb mit einem Stellglied 58, das von dem Exzenternocken 86 eines Nockenantriebs beaufschlagt ist und dadurch ausgelenkt wird. Der Nocken kann mit einem Stellmotor o.ä. angetrieben sein.

In der Bauform der Fig. 8 und 9 schließlich ist das Bremsband 42 mit Schlaufen 88, 90 über eine Exzenterwelle 92 gespannt. Die Befestigungsabschnitte für die Schlaufen 88, 90 sind dabei exzentrisch zueinander versetzt, so daß durch Drehen der Exzenterwelle 92 das Bremsband 42 gespannt und gelöst werden kann. In dem dargestellten Ausführungsbeispiel ist eine der Schlaufen 88 in ihrem Verankerungsbereich U-förmig gegabelt. Ein Verankerungsabschnitt an der anderen Lasche 90 kommt in der Gabelöffnung zu liegen, in der die Welle 92 auch ihre exzentrische Partie hat.

Fig. 10 illustriert eine Anordnung eines Planetengetriebes 94, das zugleich als mit einer Viskose-Kupplung im selben Antriebstrang liegende Zusatzkupplung arbeitet.

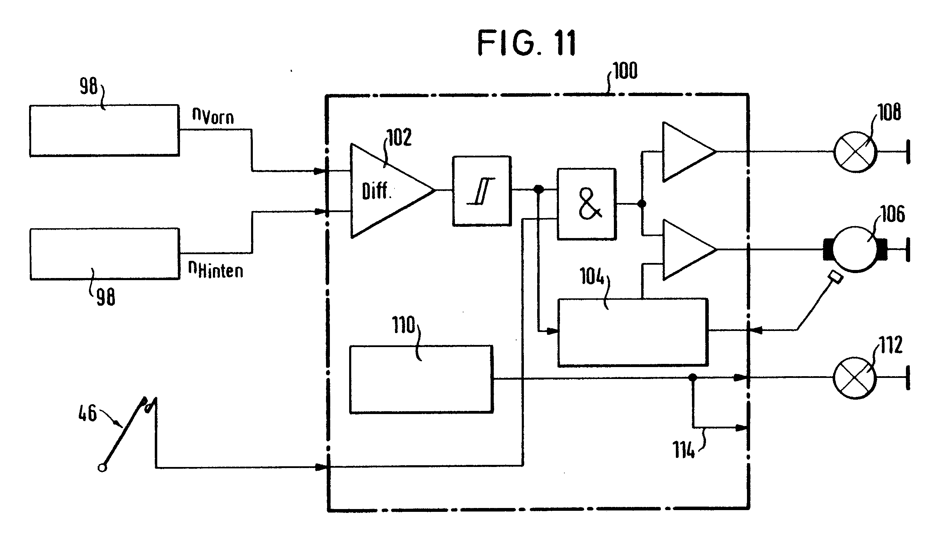

Während bei den bisher beschriebenen Ausführungsbeispielen das Hohlrad 26 des Planetengetriebes im normalen Fahrbetrieb festgebremst, und damit der Allradantrieb in ständiger Bereitschaftsstellung war, ist gemäß Fig. 10 vorgesehen, das Hohlrad 26 im normalen Fahrbetrieb freizugeben. Es bedarf eines besonderen Steuervorgangs, um das Hohlrad 26 festzubremsen und den über die Viskose-Kupplung 32 laufenden Allradantrieb in Bereitschaftsstellung zu versetzen. Dies kann beispielsweise durch einen Bedienungseingriff des Fahrers geschehen, der so das Zuschalten des Allradantrieb in der Hand hat. Der Steuervorgang kann aber auch automatisch ablaufen. Gemäß Fig. 10 und 11 werden hierzu die Drehzahlen an der Getriebeabtriebswelle im Bereich der Vorderachse und des Eingangs zum Hinterachsdifferential mit Sensoren 98 erfaßt, wozu insbesondere die entsprechenden Sensoren eines Antiblockiersystems dienen können. Die Drehzahlen werden in einer Steuereinheit 100 verglichen. Überschreitet das Differenzsignal eine vorgegebene Schwelle, so wird eine Motorsteuerung 104 des Bremsbandantriebs wirksam, und das Bremsband 42 wird festgezogen, wozu insbesondere ein Stellmotor mit Endschalter 106, aber auch jeder andere der vorbeschriebenen Bremsbandantriebe dienen kann. Zugleich leuchtet eine erste Signallampe 108 auf, die dem Fahrer die Bereitschaftsstellung des Vierradantriebs signalisiert. Dies gilt allerdings nur, wenn nicht eine oder mehrere der vorerwähnten Situationen vorliegt, in denen das Zuschalten des Vierradantriebs inhibiert werden soll. Das ist insbesondere bei einer Betätigung des Bremspedals 46 der Fall, und wird in Fig. 11 entsprechend schematisch illustriert. Ebenso kann aber auch im Schubbetrieb des Motors sowie bei Meß- und Wartungsarbeiten das Zuschalten des Allradantriebs unterbunden werden. Eine besondere Erfassung des Rangierbetriebs kann hingegen entfallen, da im Normalfall eben keine drehmomentmäßige Kopplung der Achsen über die Viskose-Kupplung 32 erfolgt.

In dem Steuerschema der Fig. 11 wird das Bremsband 42 wieder gelöst, wenn im normalen Fahrbetrieb die erfaßte Drehzahldifferenz so gering ist, daß die Viskose-Kupplung 32 keine Wirkung mehr hat. Eine Sicherheitsschaltung 110 überwacht die Sensoren 98 und sorgt dafür, daß bei einem Defekt in jedem Fall das Bremsband 42 gelöst bleibt. Ein solcher Fehler wird mit einer zweiten Signallampe 112 angezeigt. Ein Diagnoseanschluß 114 erleichtert der Werkstatt die Fehlersuche.

Liste der Bezugzeichen

10 Ausgangsrad des Schaltgetriebes
12 Differentialgehäuse
14 Zahnrad
16 Vorderachswelle
18 Hohlwelle
20 Tellerrad
22 Kegelrad
24 Planetenrad
26 Hohlrad
28 Sonnenrad
30 Wellenstummel
32 Viskose-Kupplung
34 antriebsseitiger Lamellensatz
36 abtriebsseitiger Lamellensatz
38 Gelenkwelle
40 Getriebegehäuse
42 Bremsband
44 Steuereinheit
46 Bremspedal
48 Fahrpedal
50 Zündung
52, 54 Bremsbandhalter
56 Stellschraube
58 Stellglied
60 einfachwirkender Membran-Servomotor
62 Membran
64 Hubmagnet
66 Anschluß
68 doppeltwirkender Membran-Servomotor
70 Schaltschieber
72 Bremsband-Löseschieber
74 Feder
76 Kolben-Zylinder-Einheit
78 Überspringfeder
80 Hubmagnet
82 Federspeicher
84 Druckfeder
86 Exzenternocken
88, 90 Schlaufe
92 Exzenterwelle
94 Planetengetriebe
96 Hinterachsdifferenzial
98 Sensor
100 Steuereinheit
102 Differenzverstärker
104 Motorsteuerung
106 Stellmotor mit Endschalter
108 Signallampe
110 Sicherheitsschaltung
112 Signallampe
114 Diagnoseanschluß

## Ansprüche

1. Kraftfahrzeug mit Allradantrieb, bei dem die Räder nur einer Achse ständig angetrieben sind, während der Antrieb für die Räder der zweiten Achse mittels einer im Antriebsstrang zwischen den Achsen liegenden, in Abhängigkeit von den FAhrbedingungen selbsttätig wirkenden Kupplung, insbesondere einer Viskose-Kupplung, herstellbar ist, in welchem Antriebsstrang eine steuerbare Zusatzkupplung liegt, die eine drehmomentenmäßige Kopplung und Entkopplung des Antriebs ermöglicht, dadurch **gekennzeichnet,** daß als Zusatzkupplung ein zwischen den Achsen vorgesehenes Umlauftädergetriebe, insbesondere ein Planetengetriebe (22, 24, 26, 28; 94) dient, auf das steuerbare Mittel zum Sperren eines Getriebeelements arbeiten.

2. Kraftfahrzeug nach Anspruch 1, dadurch **gekennzeichnet,** daß das Hohlrad (26) des Planetengetriebes (22, 24, 26, 28; 94) drehbar gelagert und mittels einer Bremse festbremsbar ist.

3. Kraftfahrzeug nach Anspruch 1 oder 2, dadurch **gekennzeichnet,** daß der Antrieb des Planetengetriebes (22, 24, 26, 28; 94) über den Planetenradträger (22), und der Abtrieb über das Sonnenrad (28) erfolgt.

4. Kraftfahrzeug nach einem der Ansprüche 1 bis 3, dadurch **gekennzeichnet,** daß das Hohlrad (26) im normalen Fahrbetrieb festgebremst, und dementsprechend der über die Viskose-Kupplung (32) laufende Vierradantrieb wirksam ist.

5. Kraftfahrzeug nach einem der Ansprüche 1 bis 4, dadurch **gekennzeichnet,** daß es eine Steuereinheit (44) enthält, die das Hohlrad (26) durch Lösen der Bremse freigibt, und dementsprechend die Achsen entkoppelt
(a) bei Betätigung der Betriebsbremse (46) sowie gege benenfalls einem daraus resultierenden Ansprecheneines Antiblockiersystems und/oder
(b) im Schubbetrieb und/oder
(c) beim · Abschleppen des Fahrzeugs und/oder
(d) im Fall niedriger Umgebungstemperaturen beim Rangieren und/oder
(e) bei Wartungsarbeiten, beispielsweise Rollenprüfstandsmessungen oder beim dynamischen Auswuchten der Räder.

6. Kraftfahrzeug nach Anspruch 5, dadurch **gekennzeichnet,** daß die Steuereinheit (44) als Eingangsgrößen ein die Stellung von Bremspedal (46) und Fahrpedal (48) sowie ein den Einschaltszustand der Zündung (50) charakterisierendes Signal erhält und ein die Bremse für das Hohlrad (26) aktivierendes Signal abgibt.

7. Kraftfahrzeug nach Anspruch 6, dadurch **gekennzeichnet,** daß die Steuereinheit (44) als weitere Eingangsgrößen des Signal eines Lenkwinkelgebers und das Signal eines Temperaturfühlers an der Viskose Kupplung (32) und gegebenenfalls ein die Motordrehzahl charakterisierendes Signal und/oder das Signal eines Zeitgebers erhält.

8. Kraftfahrzeug nach einem der Ansprüche 1 bis 7, dadurch **gekennzeichnet,** daß das Hohlrad (26) im normalen Fahrbetrieb freigegeben, und dementsprechend der über die Viskose-Kupplung (32) laufende Vierradantrieb unwirksam ist.

9. Kraftfahrzeug nach einem der Ansprüche 1 bis 8, dadurch **gekennzeichnet,** daß das Hohlrad (26) durch einen Bedienungseingriff und/oder bei Überschreiten einer vorgegebenen Drehzahldifferenz zwischen den Achsen automatisch betätigt festbremsbar ist.

10. Kraftfahrzeug nach einem der Ansprüche 1 bis 9, dadurch **gekennzeichnet,** daß als Bremse ein das Hohlrad (26) umschlingendes Bremsband (42) vorgesehen ist.

11. Kraftfahrzeug nach Anspruch 10, dadurch **gekennzeichnet,** daß zum Spannen des Bremsbands (42) ein vom Motoröldruck betätigtes Stellglied (58) vorgesehen ist.

12. Kraftfahrzeug nach einem der Anspüche 1 bis 11, dadurch **gekennzeichnet,** daß es einen vorzugsweise quer eingebauten Frontmotor hat, daß die Hauptantriebsachse die Vorderachse ist, und daß die Viskose-Kupplung (32) und das als Zusatzkupplung arbeitende Planetengetriebe in einem Antriebsstrang zur Hinterachse liegen.

13. Kraftfahrzeug nach Anspruch 12, dadurch **gekennzeichnet,** daß das Planetengetriebe (22, 24, 26, 28) hinter dem Vorderachsdifferential und vorzugsweise unmittelbar vor der Viskose-Kupplung (32) liegt.

14. Kraftfahrzeug nach einem der Ansprüche 1 bis 12, dadurch **gekennzeichnet,** daß das Planetengetriebe (94) vor dem Hinterachsdifferential (96) liegt.

15. Kraftfahrzeug nach einem der Ansprüche 1 bis 11, dadurch **gekennzeichnet,** daß es einen Standardantrieb mit einem vom Frontmotor zu der die Hauptantriebsachse bildenden Hinterachse führenden Antriebsstrang hat, von dem über das Planetengetriebe und die Viskose-Kupplung ein Antriebsstrang an die Vorderachse abgeht.

## Claims

1. Motor vehicle with all wheel drive in which the wheels of only one axle are driven constantly while the drive for the wheels of the second axle can be provided by a clutch, especially a viscose clutch, operating automatically in response to the driving conditions, which is arranged in the drive shaft between the axles, the drive shaft also containing a controllable secondary clutch which enables a torque-like coupling and decoupling of the drive, characterised in that the secondary clutch provided between the axles is an epicyclic gear, especially a planetary wheel gear (22, 24, 26, 28; 94), on which controllable means operate for blocking one of the gear elements.

2. Motor vehicle according to claim 1, characterised in that the hollow wheel (26) of the planetary wheel gear (22, 24, 26, 28; 94) is rotatably mounted and can be braked to a standstill by means of a brake.

3. Motor vehicle according to claim 1 or 2, characterised in that the drive of the planetary wheel gear (22, 24, 26, 28; 94) takes place via the planetary wheel support (22), and the power take-off takes place via the sun wheel (28).

4. Motor vehicle according to one of the claims 1 to 3, characterised in that the hollow wheel (26) is braked to a standstill during normal drive operation and accordingly the four wheel drive is accordingly operated by the viscose clutch (32).

5. Motor vehicle according to one of the claims 1 to 4, characterised in that it includes a control unit (44) which releases the hollow wheel (26) by freeing the brake and thereby decouples the axles
   (a) when operating the brake pedal (46) as well as, if necessary, the resulting response of an anti-blocking system and/or
   (b) when being pushed and/or
   (c) during towing of the vehicle and/or
   (d) in the case of low surrounding temperatures during shunting and/or
   (e) during servicing work, for example roller type test stand measurements or during wheel balancing.

6. Motor vehicle according to claim 5, characterised in that the control unit (44) receives as input values a signal characterising the position of the brake pedal (46) and the gas pedal (48) as well as a signal characterising the switch-on condition of the ignition (50) and which produces a signal activating the brake for the hollow wheel (26).

7. Motor vehicle according to claim 6, characterised in that the control unit (44) receives as further input values the signal of a steering angle pickup and the signal of a temperature sensor in the viscose clutch (32) and if necessary a signal characterising the engine speed and/or the signal of a timer.

8. Motor vehicle according to one of the claims 1 to 7, characterised in that the hollow wheel (26) is released during normal operation and accordingly the four-wheel drive operating via the viscose clutch (32) becomes inoperative.

9. Motor vehicle according to one of the claims 1 to 8, characterised in that the hollow wheel (26) can be automatically braked by operating a lever and/or on exceeding a given speed difference between the axles.

10. Motor vehicle according to one of the claims 1 to 9, characterised in that a brake belt (42) embracing the hollow wheel (26) is used as the brake.

11. Motor vehicle according to claim 10, characterised in that for tensioning the brake belt (42) there is provided an adjusting member (58) operated by the engine oil pressure.

12. Motor vehicle according to one of the claims 1 to 11, characterised in that preferably it has a transverse front engine, that the main drive axle is the front axle and that the viscose clutch (32) and the planetary gear operating as additional clutch are situated in a drive shaft for the rear axle.

13. Motor vehicle according to claim 12, characterised in that the planetary gear (22, 24, 26, 28) is situated behind the front axle differential and preferably directly in front of the viscose clutch (32).

14. Motor vehicle according to one of the claims 1 to 12, characterised in that the planetary gear (94) is situated in front of the rear axle differential (96).

15. Motor vehicle according to one of the claims 1 to 11, characterised in that it has a standard drive with a drive shaft leading from the front engine to the rear axle which forms the main drive axle, from this drive shaft via the planetary gear and the viscose clutch a drive shaft leads off to the front axle.

## Revendications

1. Véhicule automobile à quatre roues motrices, dans lequel les roues d'un seul essieu sont entraînées en permanence, tandis que l'entraînement pour les roues du deuxième essieu peut être réalisé au moyen d'un accouplement, notamment un accouplement visqueux, qui est situé dans la chaîne de transmission entre les essieux et qui agit automatiquement en fonction des conditions de marche, un accouplement auxiliaire asservissable, qui permet un accouplement et un désaccouplement de l'entraînement en fonction du couple de rotation, étant présent dans ladite chaîne de transmission, **caractérisé** en ce qu'un train épicycloïdal prévu entre les essieux, notamment un train planétaire (22, 24, 26, 28; 94), sur lequel agissent des moyens asservissables pour bloquer un engrenage du train, sert d'accouplement auxiliaire.

2. Véhicule automobile selon la revendication 1, **caractérisé** en ce que la couronne (26) du train planétaire (22, 24, 26, 28; 94) est montée rotative et peut être bloquée à l'aide d'un frein.

3. Véhicule automobile selon la revendication 1 ou 2, **caractérisé** en ce que le train planétaire (22, 24, 26, 28; 94) est mené par l'intermédiaire du porte-satellites (22), et est menant par l'intermédiaire de la roue solaire (28).

4. Véhicule automobile selon l'une des revendications 1 à 3, **caractérisé** en ce que la couronne (26) est bloquée en marche normale, de sorte que la propulsion à quatre roues motrices, fonctionnant par l'intermédiaire de l'accouplement visqueux (32), est en service.

5. Véhicule automobile selon l'une des revendications 1 à 4, **caractérisé** en ce qu'il contient une unité de commande (44) qui libère la couronne (26) en desserrant le frein, et désaccouple donc les essieux

   (a) lors de l'actionnement du frein de service (46) ainsi que, le cas échéant, lors du fonctionnement d'un système antiblocage qui résulte de cet actionnement, et/ou
   (b) en marche en roulement, et/ou
   (c) lors d'un remorquage du véhicule, et/ou
   (d) en cas de basses températures ambiantes lors de manoeuvres, et/ou
   (e) lors de travaux d'entretien, par exemple lors de mesures sur banc d'essai à rouleaux ou lors de l'équilibrage dynamique des roues.

6. Véhicule automobile selon la revendication 5, **caractérisé** en ce que l'unité de commande (44) reçoit comme grandeurs d'entrée un signal caractérisant la position de la pédale de frein (46) et de la pédale d'accélérateur (48) ainsi qu'un signal caractérisant l'état de l'allumage (50), et délivre un signal activant le frein de la couronne (26).

7. Véhicule automobile selon la revendication 6, **caractérisé** en ce que l'unité de commande (44) reçoit comme grandeurs d'entrée supplémentaires le signal d'un capteur d'angle de braquage et le signal d'une sonde de température sur l'accouplement visqueux (32), et éventuellement un signal caractérisant le régime moteur et/ou le signal d'une horloge.

8. Véhicule automobile selon l'une des revendications 1 à 7, **caractérisé** en ce que la couronne (26) est libérée en marche normale, de sorte que la propulsion à quatre roues motrices, fonctionnant par l'intermédiaire de l'accouplement visqueux (32), est hors service.

9. Véhicule automobile selon l'une des revendications 1 à 8, **caractérisé** en ce que la couronne (26) peut être bloquée par une intervention d'actionnement et/ou automatiquement en cas de dépassement d'une différence de régime prédéterminée entre les essieux.

10. Véhicule automobile selon l'une des revendications 1 à 9, **caractérisé** en ce qu'un ruban de frein (42) entourant la couronne (26) est prévu comme frein.

11. Véhicule automobile selon la revendication 10, **caractérisé** en ce qu'un vérin (58) actionné par la pression de l'huile moteur est prévu pour serrer le ruban de frein (42).

12. Véhicule automobile selon l'une des revendications 1 à 11, **caractérisé** en ce qu'il possède un moteur placé à l'avant, de préférence transversal, en ce que l'essieu moteur principal est l'essieu avant, et en ce que l'accouplement visqueux (32) et le train planétaire fonctionnant comme accouplement auxiliaire se trouvent dans une chaîne de transmission menant à l'essieu arrière.

13. Véhicule automobile selon la revendication 12, **caractérisé** en ce que le train planétaire (22, 24, 26, 28) se trouve après le différentiel d'essieu avant et de préférence juste avant l'accouplement visqueux (32).

14. Véhicule automobile selon l'une des revendications 1 à 12, **caractérisé** en ce que le train planétaire (94) se trouve avant le différentiel d'essieu arrière (96).

15. Véhicule automobile selon l'une des revendications 1 à 11,

**caractérisé** en ce qu'il possède une propulsion standard avec une chaîne de transmission menant du moteur placé à l'avant à l'essieu arrière constituant l'essieu moteur principal, de laquelle part une chaîne de transmission menant à l'essieu avant par l'intermédiaire du train planétaire et de l'accouplement visqueux.

FIG. 1

# FIG. 2

FIG. 3

FIG. 5

FIG. 4

FIG. 6

# FIG. 7

# FIG. 8

# FIG. 9

FIG. 10

FIG. 11